(19) **Europäisches Patentamt European Patent Office Office européen des brevets**

(11) **EP 4 343 631 B1**

(12) **EUROPEAN PATENT SPECIFICATION**

(45) Date of publication and mention of the grant of the patent:
**09.10.2024 Bulletin 2024/41**

(21) Application number: **23187208.6**

(22) Date of filing: **24.07.2023**

(51) International Patent Classification (IPC):
**G06N 3/0495** (2023.01)    **G06N 3/063** (2023.01)

(52) Cooperative Patent Classification (CPC):
**G06N 3/063; G06N 3/0495**

(54) **WEIGHT-SPARSE NPU WITH FINE-GRAINED STRUCTURED SPARSITY**

GEWICHTSSPARENDE NPU MIT FEINKÖRNIGER STRUKTURIERTER SPARSITY

NPU DE MASSE-SPARSE À DISPERSION FINE STRUCTURÉE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **21.09.2022 US 202263408827 P**
**21.09.2022 US 202263408828 P**
**03.11.2022 US 202217980544**

(43) Date of publication of application:
**27.03.2024 Bulletin 2024/13**

(73) Proprietor: **Samsung Electronics Co., Ltd.**
**Suwon-si, Gyeonggi-do 16677 (KR)**

(72) Inventors:
• **SHIN, Jong Hoon**
**San Jose, CA 95134 (US)**
• **PEDRAM, Ardavan**
**San Jose, CA 95134 (US)**
• **HASSOUN, Joseph**
**San Jose, CA 95134 (US)**

(74) Representative: **Kuhnen & Wacker**
**Patent- und Rechtsanwaltsbüro PartG mbB**
**Prinz-Ludwig-Straße 40A**
**85354 Freising (DE)**

(56) References cited:
• **HOON SHIN JONG ET AL: "Griffin: Rethinking Sparse Optimization for Deep Learning Architectures", 2022 IEEE INTERNATIONAL SYMPOSIUM ON HIGH-PERFORMANCE COMPUTER ARCHITECTURE (HPCA), IEEE, 2 April 2022 (2022-04-02), pages 861 - 875, XP034124300, DOI: 10.1109/HPCA53966.2022.00068**
• **AOJUN ZHOU ET AL: "Learning N:M Fine-grained Structured Sparse Neural Networks From Scratch", ARXIV.ORG, CORNELL UNIVERSITY LIBRARY, 201 OLIN LIBRARY CORNELL UNIVERSITY ITHACA, NY 14853, 18 April 2021 (2021-04-18), XP081928872**

EP 4 343 631 B1

**Description**

TECHNICAL FIELD

The subject matter disclosed herein relates to neural network processing devices. More particularly, the subject matter disclosed herein relates to a neural processing unit that is reconfigurable to process a fine-grain structured sparsity weight arrangement selected from N:M = 1:4, 2:4, 2:8 and 4:8 fine-grain structured weight sparsity arrangements.

BACKGROUND

Processing of Deep Neural Networks (DNNs) may be accelerated by Neural Processing Units (NPUs). That is, the sparsity of operands associated with General Matrix Multiply (GEMM) operations in DNNs may be used to accelerate operations performed by NPUs. Fine-grained structured sparsity, especially N:M sparsity (N nonzero elements out of M weight values), may be helpful to maintain DNN accuracy and save hardware overhead as compared to random sparsity. Existing technology, however, only supports one N:M configuration (i.e., N:M = 2:4), while there are additional fine-grained structured sparsity configurations, such as N:M = {1:4, 4:8, 2:8}.

HOON SHIN JONG ET AL: "Griffin: Rethinking Sparse Optimization for Deep Learning Architectures", 2022 IEEE INTERNATIONAL SYMPOSIUM ON HIGH-PERFORMANCE COMPUTER ARCHITECTURE (HPCA), IEEE, 2 April 2022 (2022-04-02), pages 861-875, relates to Sparse Optimization for Deep Learning Architectures.

AOJUN ZHOU ET AL: "Learning N:M Fine-grained Structured Sparse Neural Networks From Scratch", ARXIV.ORG, CORNELL UNIVERSITY LIBRARY, 201 OLIN LIBRARY CORNELL UNIVERSITY ITHACA, NY 14853, 18 April 2021 (2021-04-18), relates to Learning N:M Fine-grained Structured Sparse Neural Networks

SUMMARY

The invention is defined in the independent claim. Auxiliary embodiments are defined in the dependent claims.

BRIEF DESCRIPTION OF THE DRAWING

In the following section, the aspects of the subject matter disclosed herein will be described with reference to the figures, in which:

FIG. 1A depicts an example dot-product operation, which is commonly performed in a neural network;
FIG. 1B depicts an example dot-product operation being performed by a single multiply and accumulate (MAC) unit;
FIG. 1C depicts an example dot-product operation in which one of the sets of operands is sparse;
FIG. 2 depicts an example of a set of dense weights values being formed into an N:M fine-grain structured sparse set of weight values;
FIG. 3A depicts four possible sparse-mask cases, or patterns, across a channel $C_0$ for a 1:4 fine-grain structured weight sparsity arrangement;
FIG. 3B depicts an example configuration of routing logic for selecting an appropriate activation value from an activation buffer based on a weight sparse-mask case for a 1:4 fine-grain structured weight sparsity arrangement according to the subject matter disclosed herein;
FIG. 4A depicts six possible sparse-mask cases, or patterns, across a channel $C_0$ for a 2:4 fine-grain structured weight sparsity arrangement;
FIG. 4B depicts an example configuration of routing logic for selecting an appropriate activation value from an activation buffer based on, for example, a weight zero-bit mask for a 2:4 fine-grain structured weight sparsity arrangement according to the subject matter disclosed herein;
FIG. 5A depicts 13 of the possible 28 sparse-mask cases, or patterns, across a channel $C_0$ for a 2:8 fine-grain structured weight sparsity arrangement;
FIG. 5B depicts an example configuration of routing logic for selecting an appropriate activation value from an activation buffer based on, for example, a weight zero-bit mask for a 2:8 fine-grain structured weight sparsity arrangement according to the subject matter disclosed herein;
FIG. 6A depicts two of the possible 70 sparse-mask cases, or patterns, across a channel $C_0$ for a 4:8 fine-grain structured weight sparsity arrangement;
FIG. 6B depicts an example configuration of routing logic for selecting an appropriate activation value from an activation buffer based on a weight zero-bit mask case a 4:8 fine-grain structured weight sparsity arrangement according to the subject matter disclosed herein;
FIG. 7 depicts an example of a neural processing unit that is reconfigurable for fine-grain structured sparsity arrangements of 1:4, 2:4, 2:8 and 4:8;

FIGS. 8A and 8B respectively depict how the activation buffer for the 2:8 and the 2:4 weight-only fine-grain structured sparsity NPU architectures may be made more area efficient;

FIGS. 9A and 9B respectively illustrate how the 2:8 and the 2:4 weight-only fine-grain structured sparsity NPU architectures may be made more area efficient; and

FIG. 10 depicts an electronic device 1000 that may include at least one NPU configured for one or more N:M fine-grain structured sparsity arrangements.

DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

The subject matter disclosed herein provides an efficient hardware logic architecture in an NPU that supports N:M fine-grained structured sparsity for N:M = 1:4, 4:8 and 2:8 fine-grained structured sparsity. Additionally, the subject matter disclosed herein provides a reconfigurable sparse logic architecture that supports N:M = { 1:4, 2:4, 2:8, 4:8} fine-grained structured sparsity. That is, a single sparse NPU logic architecture may be reconfigured to efficiently support four different N:M sparsity modes. For example, for N:M = 2:8 or for 1:4, the NPU architectures disclosed herein provide a speed up of 4x times. Further, the sizes of activation buffers sizes and multiplexer complexity may be reduced in the N:M sparse logic architectures disclosed herein at a cost of a demultiplexer and an additional adder tree per multiplier unit, but with an overall power reduction and an area efficiency that may be improved greater than 3.5 times.

While conventional N:M sparsity clusters M-weights in a reducible dimension (input channel for convolution operation, or column vector of weight matrix in GEMM operation), the subject matter disclosed herein also clusters M weights from both reducible dimension and irreducible dimension (output channel or output pixel for convolution operation, or row vector of weight matrix in a GEMM operation).

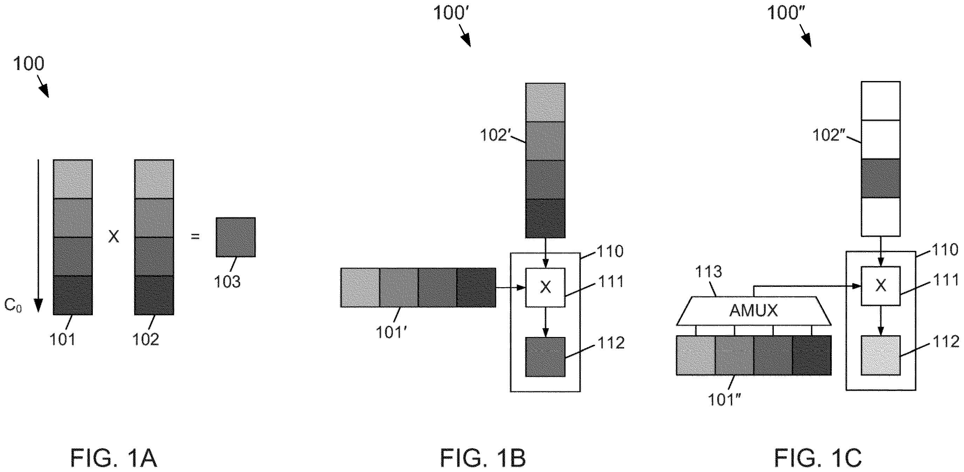

FIG. 1A depicts an example dot-product operation 100, which is commonly performed in a neural network. A dot product of first set of dense operands 101 (which may be considered to be activation values) and a second set of dense operands 102 (which may be considered to be weight values) are formed at 103. The input dimension C0 is reduced after the dot-product operation. FIG. 1B depicts an example dot-product operation 100' being performed by a single multiply and accumulate (MAC) unit 110. A first set of dense operands 101' and a second set of dense operands 102' are sequentially input to a multiplier 111 to form a series of product values that are added together by an accumulator 112. As before, the operands 101' may be considered to be activation values and the operands 102' may be considered to be weight values. FIG. 1C depicts an example dot-product operation 100" in which one of the sets of operands is sparse. The dot-product operation is depicted as being performed by a single MAC unit 110 on a first set of dense operands 101" and a sparse set of operands 102". For the example depicted in FIG. 1C, only one operand 102" has a non-zero value, whereas the other operands 102" are zero values. Again, the operands 101" may be considered to be activation values and the operands 102" may be considered to be weight values. An activation multiplexer (AMUX) 113 may be used to select an appropriate operand 101" to correspond to the non-zero value operand 102". A controller (not shown) may control the multiplexer to select the appropriate activation value based on, for example, a weight zero-bit mask or metadata associated with the operands 102".

The weight values of a trained neural network are fixed known values whereas activation values depend on inputs to the neural network and, therefore, vary. The weight values of a trained neural network may be dense or, alternatively, may be pruned and then compressed to form dense weight values. The weight values are arranged in an N:M fine-grain structured sparse arrangement.

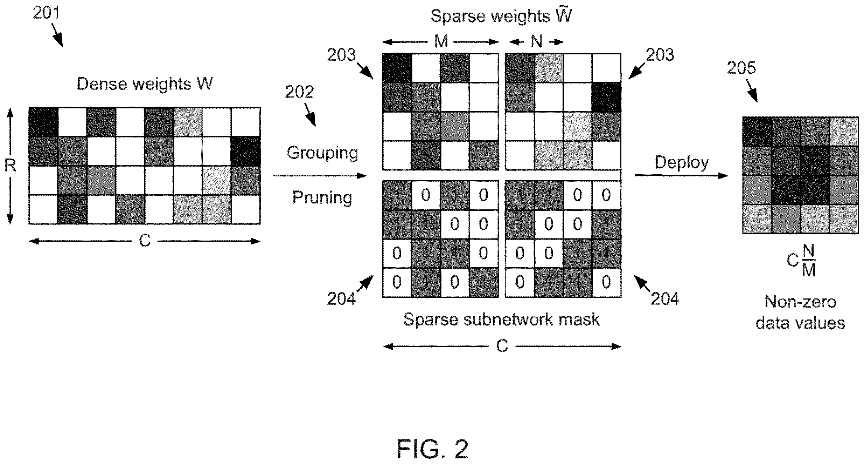

FIG. 2 depicts an example of a set of dense weights values being formed into an N:M fine-grain structured sparse set of weight values. The dense weights values W are depicted in an example matrix at 201 in which R is the number of output channels and C is the number of channels in a linear layer of neural network. Relative values are depicted as light and dark matrix elements (blocks) in which relatively lower-value elements are depicted as lighter gray and relatively higher-value elements are depicted as darker grays. At 202, the weight values W are grouped into 4x4 groups 203 prior to pruning. Sparse subnetwork masks for the two weight groups are indicated at 204. After pruning, the pruned weights are deployed at 205 in a N:M fine-grain structured sparse arrangement in which in each group of M consecutive weights, there are at most N weights have a non-zero value. The $C \frac{N}{M}$ indicated at 205 means that as only N elements out of M weights in C channels are kept, the channel size of the weight tensor shrinks from C to $C \frac{N}{M}$.

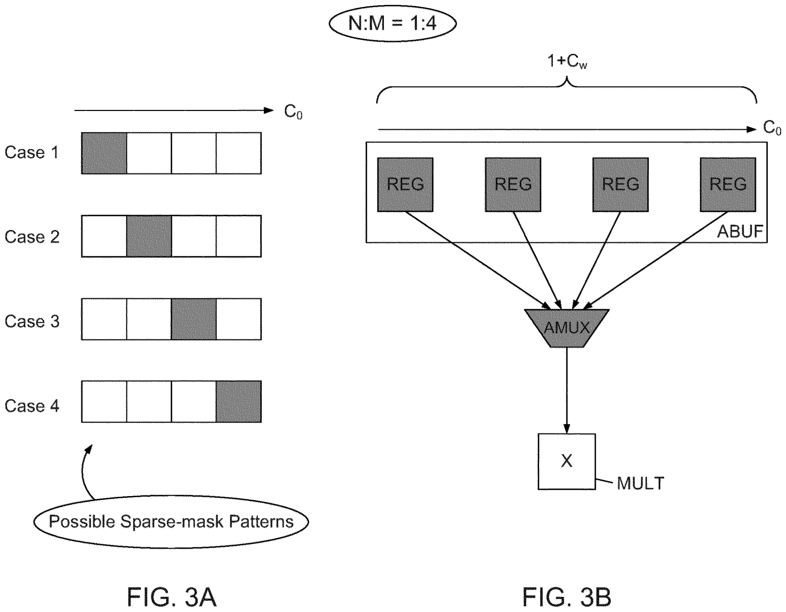

FIG. 3A depicts four possible sparse-mask cases, or patterns, across a channel $C_0$ for a 1:4 fine-grain structured weight sparsity arrangement. The sparse-mask cases 1-4 indicated in FIG. 3A may be considered to depict four different register positions of a four-register, or four-location, weight buffer where a non-zero weight value may be located, as indicated by the gray-shaded blocks. FIG. 3B depicts an example configuration of routing logic for selecting an appropriate activation value from an activation buffer (ABUF) based on a weight sparse-mask or weight metadata for a 1:4 fine-grain structured weight sparsity arrangement according to the subject matter disclosed herein.

The respective inputs to a 4-to-1 activation multiplexer (AMUX) are each connected to a corresponding ABUF register (REG) of a four-register ABUF. The output of the AMUX is input to a multiplier MULT. The AMUX may be controlled by a control unit (not shown) to select a particular ABUF register based on, for example, a weight zero-bit mask or weight metadata. The routing logic depicted in FIG. 3B is not configured to "borrow" activation values from future cycles (i.e., a lookahead "borrow"), but is configured to "borrow" activation values from neighboring channels (i.e., a lookaside "borrow"). $C_w$ indicates a maximum channel range (lookaside distance) that an activation value may be routed. That is, if an activation value is at an original position (0), the maximum (farthest) lookaside position to which the activation value may be routed would be position 3. For the routing logic depicted in FIG. 3B, $C_w$ is 3. If bidirectional routing is allowed, a $C_w$ equal to 3 would be indicated as +1.5. That is, an activation value may be routed in average from a left middle position (-1.5) to a right middle position (+1.5). $1 + C_w$ indicates an input fan-in for the AMUX to allow routing of an activation value from its original position to a $C_w$ lookaside position.

The routing logic depicted in FIG. 3B for a structured sparsity of N:M = 1:4 is also capable of operating in a random (irregular) sparsity mode of $(T_w, C_w, K_w) = (3,0,0)$ in which $T_w$ is a lookahead in time, $C_w$ is a lookaside in input-channel, and $K_w$ is a lookaside in output channel and the w subscript indicates weights. Operating in a structured sparsity of N:M = 1:4 is more efficient than operating in a random sparsity mode of (3,0,0) by providing a 4x speed up, whereas the ideal speedup for a random sparsity mode of (3,0,0) is not always possible because the speedup is based on the non-zero value distribution pattern.

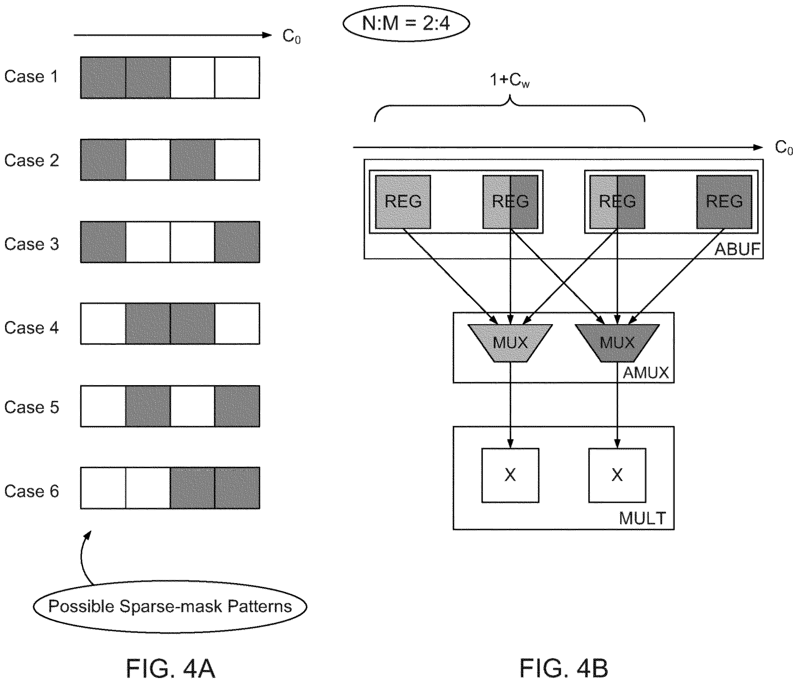

FIG. 4A depicts six possible sparse-mask cases, or patterns, across a channel $C_0$ for a 2:4 fine-grain structured weight sparsity arrangement. The sparse-mask cases 1-6 indicated in FIG. 4A may be considered to depict six different register positions of a four-register weight buffer where a non-zero weight value may be located, as indicated by gray-shaded blocks. FIG. 4B depicts an example configuration of routing logic for selecting an appropriate activation value from an activation buffer (ABUF) based on, for example, a weight zero-bit mask or weight metadata for a 2:4 fine-grain structured weight sparsity arrangement according to the subject matter disclosed herein.

In the example configuration of routing logic depicted in FIG. 4B, the AMUX is an array of two multiplexers (MUXs) in which each multiplexer is a 3-to-1 multiplexer. The respective inputs to a multiplexer of the AMUX array are connected to register (REG) positions of a four-register ABUF as shown. More specifically, the three inputs to the leftmost multiplexer are connected to the leftmost three ABUF registers. In one embodiment, the ABUF array may include two activation buffers that each have a register width of 2. The three inputs to the rightmost multiplexer are connected to the rightmost three ABUF registers. The output of each respective multiplexer is input to a corresponding multiplier in a multiplier array MULT. Each multiplier of the MULT array is indicated by a block containing an X. The multiplexers of the AMUX array may each be controlled by a control unit (not shown) that selects a particular ABUF register based on, for example, a weight zero-bit mask or weight metadata. The example configuration of routing logic depicted in FIG. 4B is not configured to "borrow" activation values from future cycles, but is configured to "borrow" activation values from neighboring channels.

The maximum channel range $C_w$ for the routing logic of FIG. 4B is 2, or +1 for bidirectional routing. The routing logic of FIG. 4B is also capable of operating in a random sparsity mode of $(T_w, \overline{C_w}, K_w) = (1,1,0)$.

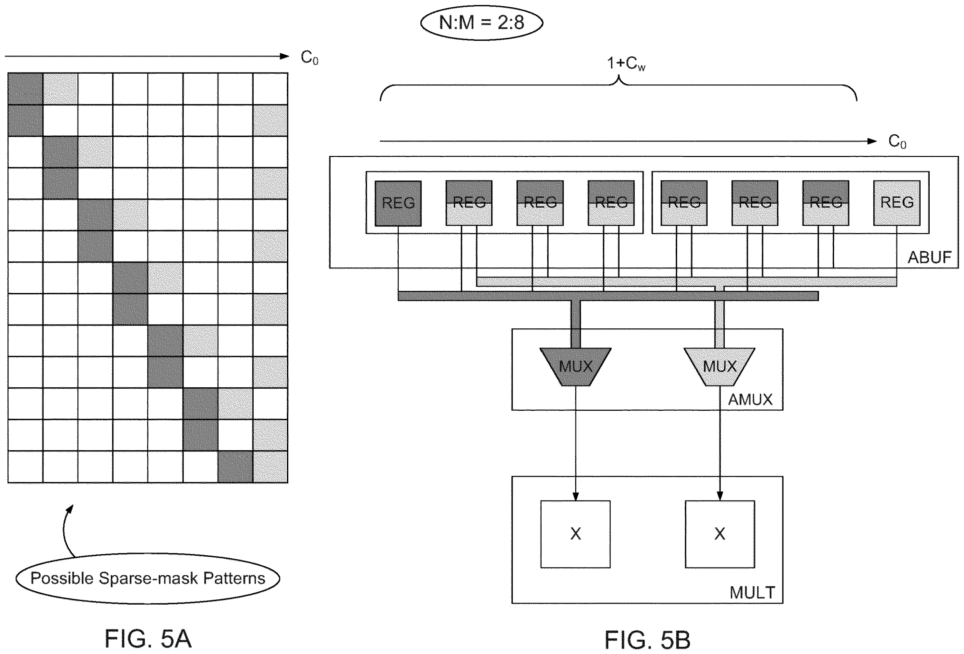

FIG. 5A depicts 13 of the possible 28 sparse-mask cases, or patterns, across a channel $C_0$ for a 2:8 fine-grain structured weight sparsity arrangement. The example 13 sparse-mask cases indicated in FIG. 5A may be considered to depict different register positions of an eight-register weight buffer where a non-zero weight value may be located, as indicated by the gray-shaded blocks. The two different gray shades depict two different non-zero weight values. FIG. 5B depicts an example configuration of routing logic for selecting an appropriate activation value from an activation buffer (ABUF) based on, for example, a weight zero-bit mask or metadata for a 2:8 fine-grain structured weight sparsity arrangement according to the subject matter disclosed herein.

In the example configuration of routing logic depicted in FIG. 5B, the AMUX is an array of two multiplexers (MUXs) in which each multiplexer is a 7-to-1 multiplexer. The respective inputs to a multiplexer of the AMUX array are connected to register (REG) positions of an eight-register ABUF as shown. That is, the seven inputs to the leftmost multiplexer are connected to the leftmost seven ABUF registers. The seven inputs to the rightmost multiplexer are connected to the rightmost seven ABUF registers. In one embodiment, the ABUF array may include two activation buffers each having a register width of 4. The output of each respective multiplexer is input to a corresponding multiplier in a multiplier array MULT. The multipliers in the MULT array are indicated by a block containing an X. The multiplexers of the AMUX array may each be controlled by a control unit (not shown) that selects a particular ABUF register based on, for example, a weight zero-bit mask or weight metadata. The example configuration of routing logic depicted in FIG. 5B is not configured to "borrow" activation values from future cycles, but is configured to "borrow" activation values from neighboring channels.

The maximum channel range $C_w$ for the routing logic of FIG. 5B is 6, or $\pm 3$ for bidirectional routing. The routing logic of FIG. 5B is also capable of operating in a random sparsity mode of $(T_w, \overline{C_w}, K_w) = (3,1,0)$.

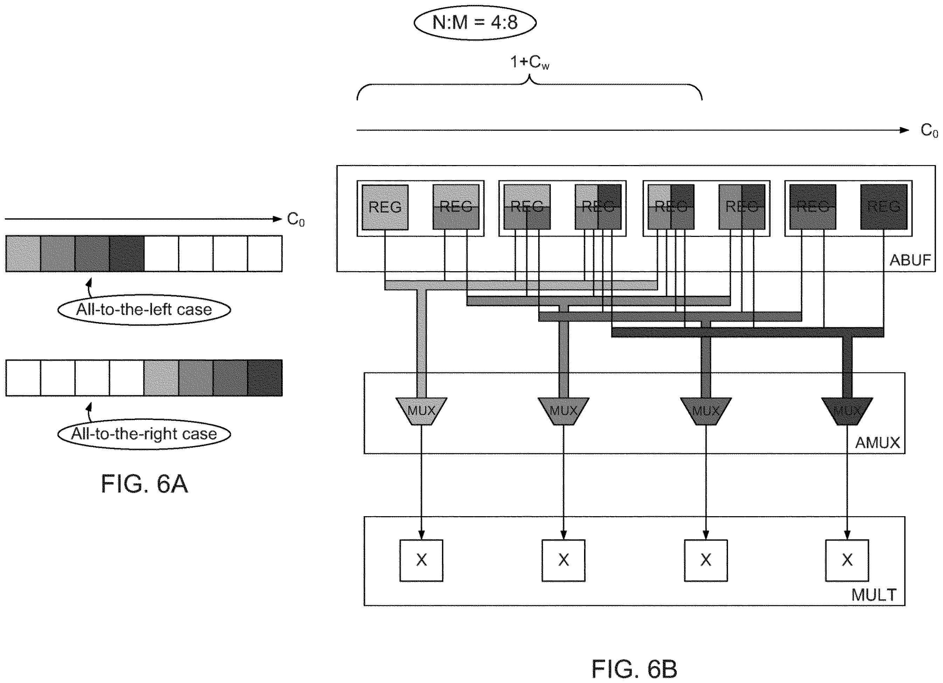

FIG. 6A depicts two of the possible 70 sparse-mask cases, or patterns, across a channel $C_0$ for a 4:8 fine-grain structured weight sparsity arrangement. The two sparse-mask cases indicated in FIG. 6A depict cases when all non-zero weight values are to the left and when all non-zero weight values are to the right, as indicated by the four different gray-shaded blocks. FIG. 6B depicts an example configuration of routing logic for selecting an appropriate activation value from an activation buffer (ABUF) based on a weight zero-bit mask or weight metadata a 4:8 fine-grain structured weight sparsity arrangement according to the subject matter disclosed herein.

In the example configuration of routing logic depicted in FIG. 6B, the AMUX is an array of four multiplexers (MUXs) in which each multiplexer is a 5-to-1 multiplexer. The respective inputs to a multiplexer of the AMUX array are connected to register (REG) positions of an eight-register ABUF as shown. For example, the five inputs to the leftmost multiplexer are connected to the leftmost five ABUF registers. Similarly, the five inputs to the rightmost multiplexer are connected to the rightmost five ABUF registers. In one embodiment, the ABUF array may include four activation buffers each having a register width of 2. The output of each respective multiplexer is input to a corresponding multiplier in a multiplier array MULT. The multipliers in the MULT array are indicated by a block containing an X. The multiplexers of the AMUX array may each be controlled by a control unit (not shown) that selects a particular ABUF register based on, for example, a weight zero-bit mask or weight metadata. The routing logic depicted in FIG. 6B is not configured to "borrow" activation values from future cycles, but is configured to "borrow" activation values from neighboring channels.

The maximum channel range $C_w$ for the routing logic of FIG. 6B is 4, or $\pm 2$ for bidirectional routing. The routing logic of FIG. 6B is also capable of operating in a random sparsity mode of $(T_w, \overline{C_w}, K_w) = (1,2,0)$.

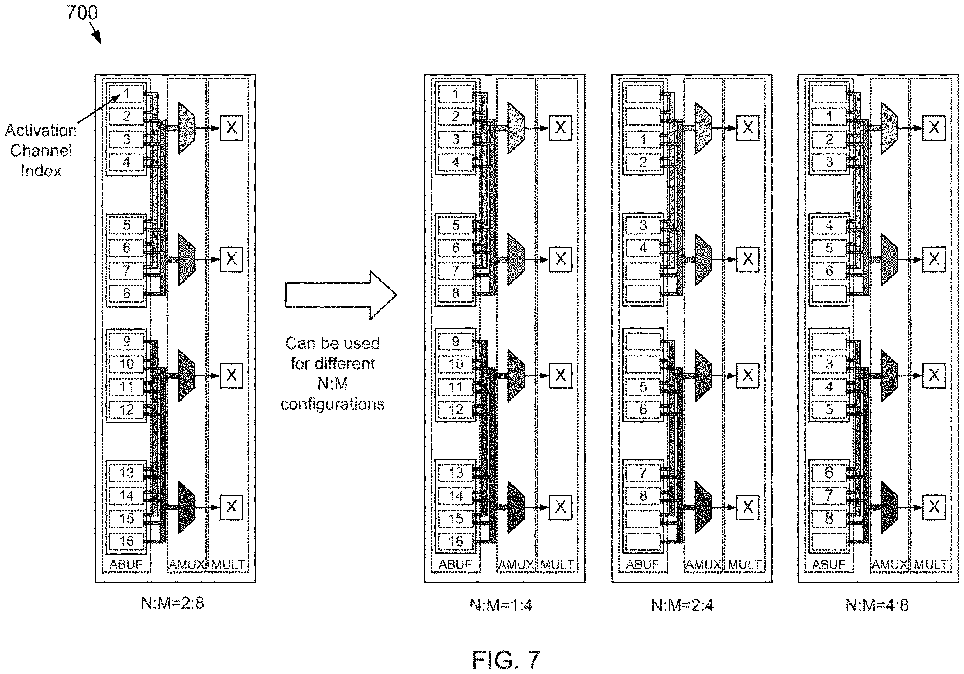

FIG. 7 depicts an example embodiment of a neural processing unit (NPU) 700 that is reconfigurable for fine-grain structured sparsity arrangements of 1:4, 2:4, 2:8 and 4:8. The NPU 700 may include four multipliers that are configured in an MULT array. The multipliers in a MULT array are indicated by a block containing an X. The NPU 700 may also include four activation multiplexers that are configured in an AMUX array. The multiplexers in an AMUX array are indicated by trapezoidal shapes. The activation buffers may be configured as four four-register buffers and are arranged in an ABUF array. Each multiplexer of the AMUX array may be a 7-to-1 multiplexer. The inputs to two of the multiplexers of the AMUX array may be connected to two four-register buffers in the same manner as described herein in connection with FIG. 5B. The connections between the multiplexers of the AMUX and the registers of the ABUF may be as shown in FIG. 7.

The architecture of the NPU 700 is used for fine-grain structured weight sparsity arrangements of 1:4, 2:4, 2:8 and 4:8 by selective placement of activation values in the registers of the ABUF. Referring to FIG. 7, the respective activation channels may be indexed, as indicated at the leftmost side of each NPU 700 configuration. The channel indexing changes based on which of the four fine-grain structured sparsity arrangements for which the NPU 700 has been configured.

When the NPU 700 is configured for a 2:8 fine-grain structured weight sparsity, the connections between the ABUF, AMUX and MULT arrays are depicted above the N:M=2:8 configuration. Sixteen activation channels are each input to a corresponding ABUF array register. The AMUX array multiplexers are controlled by a controller (not shown) to select an appropriate ABUF register based, for example, on a weight zero-bit mask or weight metadata associated with the 2:8 fine-grain structured weight sparsity values.

When the NPU 700 is configured for a 1:4 fine-grain structured weight sparsity, the connections between the ABUF, AMUX and MULT arrays are depicted above the N:M=1:4 configuration. The N:M=1.4 configuration is the same as the N:M=2:8 configuration. For the N:M=1:4 configuration, 16 activation channels are each input to a corresponding ABUF array register. The AMUX array multiplexers are controlled by a controller (not shown) to select an appropriate ABUF register based, for example, on a weight zero-bit mask or weight metadata associated with the 1:4 fine-grain structured weight sparsity values.

When the NPU 700 is configured for a 2:4 fine-grain structured weight sparsity, the connections between the ABUF, AMUX and MULT arrays are depicted above the N:M=2:4 configuration. For the N:M=2:4 configuration, eight activation channels are each input to a corresponding ABUF array register as indicated. The AMUX array multiplexers are controlled by a controller (not shown) to select an appropriate ABUF register based, for example, on a weight zero-bit mask or weight metadata associated with the 2:4 fine-grain structured weight sparsity values.

When the NPU 700 is configured for a 4:8 fine-grain structured weight sparsity, the connections between the ABUF, AMUX and MULT arrays are depicted above the N:M=4:8 configuration. For the N:M=4:8 configuration, eight activation channels are each input to a corresponding ABUF array register as indicated. More specifically, the two topmost multipliers have access to channels 1-6. The topmost multiplier has access to channels 1-5, and the next multiplier down has access to channels 2-6, which corresponds to the NPU configuration depicted in FIG. 6B. Additionally, the two bottom most multipliers have access to channels 3-6, in which the third multiplier from the top has access to channels 3-7 and the bottom multiplier has access to channels 4-8, which also corresponds to the NPU configuration depicted in FIG. 6B. The AMUX array multiplexers are controlled by a controller (not shown) to select an appropriate ABUF register based, for example, on a weight zero-bit mask or weight metadata associated with the 4:8 fine-grain structured weight sparsity values.

Table 1 sets forth hardware costs and speed up benefits for the four different NPU weight-only (W-Only) structured-sparsity core architectures disclosed herein. The W-Only 1:4 sparse NPU logic design depicted in FIGS. 3A and 3B may be configured to operate in both the 1:4 and the 2:4 sparse modes, whereas the W-Only 2:4 sparse NPU logic design depicted in FIGS. 4A and 4B may be configured to only operate in the 2:4 sparse mode. The W-Only 2:8 sparse NPU logic design depicted in FIGS. 5A and 5B may be configured to operate in all four sparse modes, as depicted in FIG. 7, and the W-Only 4:8 sparse NPU logic design depicted in FIGS. 6A and 6B may be configured to operate in the 2:4 and 4:8 sparse modes. The W-Only 2:8 NPU logic design provides freedom for a programmer to choose any of the four (1:4, 2:4, 2:8 or 4:8) N:M fine-grain structured sparsity modes. Table 1 also includes information regarding the AMUX fan-in, the ABUF size (width) and the computational speed up associated with each of the four different NPU logic designs disclosed herein.

Table 1 also shows approximate computational speed up provided by each of the different NPU logic designs disclosed herein for a random weight sparsity mode of ~80% sparsity.

Table 1

| Type | Structured Sparsity {N:M} | | | |
|---|---|---|---|---|
| Sparse Logic Design | W-Only {1:4} | W-Only {2:4} | W-Only {2:8} | W-Only {4:8} |
| N:M Sparse Modes | {1:4,2:4} | {2:4} | {1:4,2:4,2:8,4:8} | {2:4,4:8} |
| AMUX Fan-in | 4 | 3 | 7 | 5 |
| ABUF Size | 4 | 2 | 4 | 2 |
| Speed up (N:M) | 4x | 2x | 4x | 2x |
| Random Sparse Modes $(T_w,C_w,K_w)$ | (3,0,0) | (1,1,0) | (3,1,0) | (1,2,0) |
| Speed up (Random ~80% sparsity) | ~2.2x | ~1.5x | ~2.6x | -1.7X |

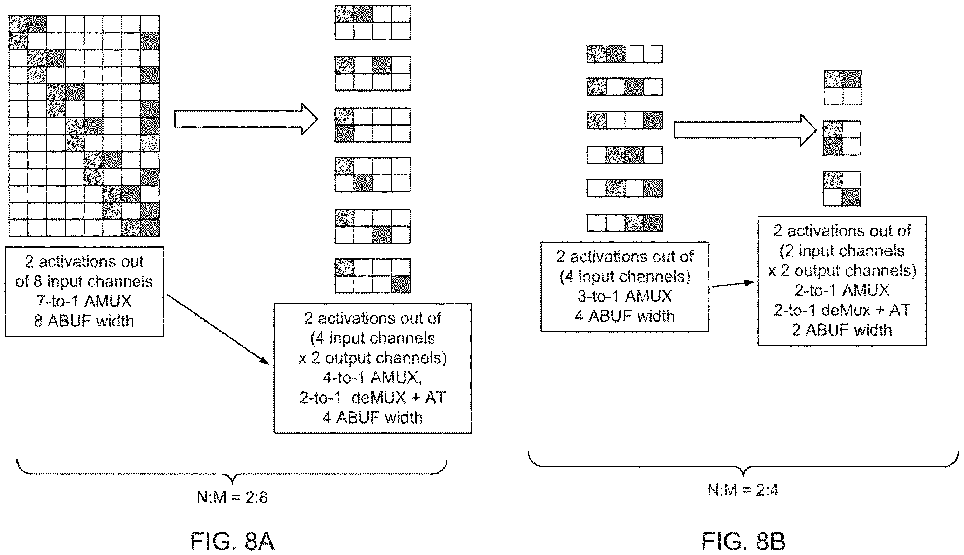

FIGS. 8A and 8B respectively depict how the ABUF for the 2:8 and the 2:4 weight-only fine-grain structured sparsity NPU architectures may be made more area efficient. The ABUF for both the 2:8 and the 2:4 NPU architectures may be reduced in size, which allows the corresponding AMUX to also be reduced in complexity. The size reduction and complexity reduction may be provided by a hardware costs of a demultiplexer and one additional adder tree per each multiplier.

The left side of FIG. 8A depicts 13 of the possible 28 sparse-mask cases, or patterns, across a channel $C_0$ for a 2:8 fine-grain structured weight sparsity arrangement. The ABUF configuration for a 2:8 fine-grain structured weight sparsity NPU, such as depicted in FIG. 5B, is an 8-channel ABUF having a register depth dimension of 1. This configuration for the ABUF corresponds to a weight buffer that is a 8-channel WBUF having a depth of 1. The size of the ABUF may be reconfigured to be a 4-channel ABUF having register depth dimension of 2, as depicted on the right side of FIG. 8A where a few example 2-out-of-8 sparsity possibilities are depicted. To reduce the dimension of the ABUF for this NPU architecture, the WBUF may also be reconfigured to be a 4-channel buffer having a register depth dimension of 2. The AMUX corresponding to the size-reduced ABUF becomes two AMUX 4-to-1 multiplexers, replacing each of the 7-to-1 multiplexers depicted in FIG. 5B. The outputs of the two size-reduced multiplexers are respectively input to two multipliers. The output of each multiplier is coupled to a 1-to-2 demultiplexer. The respective outputs of each 1-to-2 demultiplexer is coupled to an adder tree in which the second adder tree accounts for the added dimensions of the ABUF and the WBUF.

The left side of FIG. 8B depicts the 6 possible sparse-mask cases, or patterns, across a channel $C_0$ for a 2:4 fine-grain structured weight sparsity arrangement. The ABUF configuration for a 2:4 fine-grain structured weight sparsity NPU, such as depicted in FIG. 4B, is an 4-channel ABUF having a register depth dimension of 1. This configuration for the ABUF corresponds to a weight buffer that is a 4-channel WBUF having a register depth of 1. The size of the ABUF may be reconfigured to be a 2-channel ABUF having depth dimension of 2, as depicted on the right side of FIG. 8B where a few example 2-out-of-4 sparsity possibilities are depicted. To reduce the dimension of the ABUF for this NPU architecture, the WBUF may also be reconfigured to be a 2-channel buffer having a register depth dimension of 2. The AMUX corresponding to the size-reduced ABUF becomes two AMUX 2-to-1 multiplexers, replacing each of the 3-to-1 multiplexers depicted in FIG. 5B. The outputs of the two size-reduced multiplexers are respectively input to two multipliers. The output of each multiplier is coupled to a 1-to-2 demultiplexer. The respective outputs of each 1-to-2 demultiplexer is coupled to an adder tree in which the second adder tree accounts for the added dimensions of the ABUF and the WBUF.

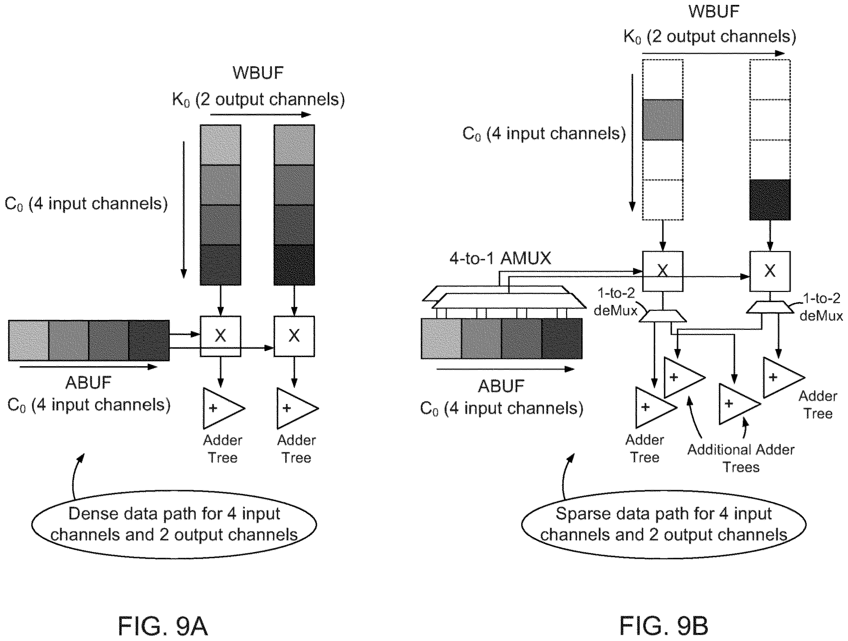

FIGS. 9A and 9B respectively illustrate how the 2:8 and the 2:4 weight-only fine-grain structured sparsity NPU architectures may be made more area efficient. FIG. 9A depicts an example dense weight data-path arrangement in which the WBUF includes two output weight channels for four weight input channels, and the ABUF includes one activation output channel for four activation input channels. Each weight output channel is input to a corresponding multiplier (indicated by a block containing an X). The one activation output channel is broadcast to each of the two multipliers. The respective outputs of the multipliers are each coupled to a single adder tree.

FIG. 9B depicts an example sparse weight data-path arrangment in which the WBUF includes two output weight channels for four weight input channels, and the ABUF includes one activation output channel for four activation input channels. Each weight output channel is input to a corresponding multiplier (indicated by a block containing an X). The one activation output channel is coupled to each of the two multipliers through two 4-to-1 activation multiplexers. Each activation multiplexer is controlled to select an activation value corresponding to a non-zero value weight that is input to a multiplier. The respective outputs of the multipliers are each coupled to a 1-to-2 demultiplexer. Each output of a demultiplexer is respectively coupled to a first and a second adder tree.

The reduction in ABUF size described herein is applicable for all four NPU weight-only (W-Only) structured-sparsity core architectures disclosed herein. Table 2 sets forth hardware costs and speed up benefits for the four different NPU weight-only (W-Only) structured-sparsity core architectures disclosed herein. The hardware costs and benefits are also shown for reduced ABUF sizes, that is, for ABUFs that have been reconfigured from 1 depth dimension to 2 depth dimensions, as indicated in "→2D" columns immediately to the right of the different N:M sparsity modes.

Table 2

| Type | Structured Sparsity {N:M} | | | | | | | |
|---|---|---|---|---|---|---|---|---|
| Sparse Logic Design | W-Only {1:4} | →2D | W-Only {2:4} | →2D | W-Only {2:8} | →2D | W-Only {4:8} | →2D |
| $(T_w,C_w,K_w)$ <br> $(T_a,C_a,K_a)$ | (0,3,0) [0,0,0] | (0,1,1) [0,0,0] | (0,2,0) [0,0,0] | (0,1,1) [0,0,0] | (0,6,0) [0,0,0] | (0,3,1) [0,0,0] | (0,4,0) [0,0,0] | (0,3,1) [0,0,0] |
| AMUX Fan-in | 4 | 2 | 3 | 2 | 7 | 4 | 5 | 4 |
| ABUF | 4 | 2 | 2 | 2 | 4 | 2 | 2 | 2 |
| Adder Tree(s) | 1 | 2 | 1 | 2 | 1 | 2 | 1 | 2 |
| Expected Speed up | 4x | | 2x | | 4x | | 2x | |

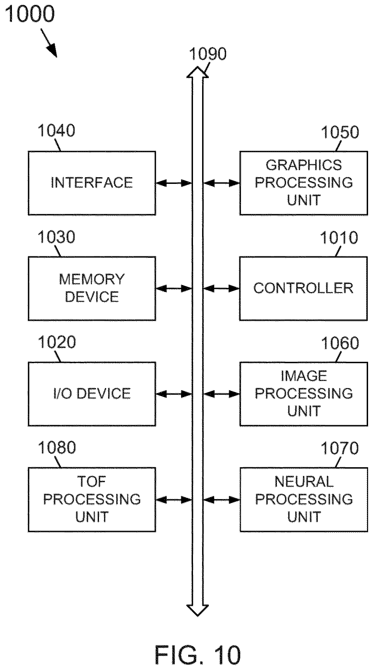

FIG. 10 depicts an electronic device 1000 that may include at least one NPU configured for one or more N:M fine-grain structured sparsity arrangements. Electronic device 1000 and the various system components of electronic device 1000 may be formed from one or modules. The electronic device 1000 may include a controller (or CPU) 1010, an input/output device 1020 such as, but not limited to, a keypad, a keyboard, a display, a touch-screen display, a 2D image sensor, a 3D image sensor, a memory 1030, an interface 1040, a GPU 1050, an imaging processing unit 1060, a neural processing unit 1070, a TOF processing unit 1080 that are coupled to each other through a bus 1090. The 2D image sensor and/or the 3D image sensor may be part of the imaging processing unit 1060, or the 3D image sensor may be part of the TOF processing unit 1080. The controller 1010 may include, for example, at least one microprocessor, at least one digital signal processor, at least one microcontroller, or the like. The memory 1030 may be configured to store a command code to be used by the controller 1010 and/or to store a user data. The neural processing unit 1070 includes at least one NPU configured for one or more N:M fine-grain structured sparsity arrangements.

The interface 1040 may be configured to include a wireless interface that is configured to transmit data to or receive data from, for example, a wireless communication network using a RF signal. The wireless interface 1040 may include, for example, an antenna. The electronic device 1000 also may be used in a communication interface protocol of a communication system, such as, but not limited to, Code Division Multiple Access (CDMA), Global System for Mobile Communications (GSM), North American Digital Communications (NADC), Extended Time Division Multiple Access (E-TDMA), Wideband CDMA (WCDMA), CDMA2000, Wi-Fi, Municipal Wi-Fi (Muni Wi-Fi), Bluetooth, Digital Enhanced Cordless Telecommunications (DECT), Wireless Universal Serial Bus (Wireless USB), Fast low-latency access with seamless handoff Orthogonal Frequency Division Multiplexing (Flash-OFDM), IEEE 802.20, General Packet Radio Service (GPRS), iBurst, Wireless Broadband (WiBro), WiMAX, WiMAX-Advanced, Universal Mobile Telecommunication Service - Time Division Duplex (UMTS-TDD), High Speed Packet Access (HSPA), Evolution Data Optimized (EVDO), Long Term Evolution - Advanced (LTE-Advanced), Multichannel Multipoint Distribution Service (MMDS), Fifth-Generation Wireless (5G), Sixth-Generation Wireless (6G), and so forth.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous.

Thus, particular embodiments of the subject matter have been described herein. Other embodiments are within the scope of the following claims.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

**Claims**

1.   A neural processing unit (700, 1070), comprising:

a weight buffer (WBUF) configured to store weight values (102, 102', 102") in a fine-grain structured sparsity weight arrangement selected from a group of fine-grain structured sparsity weight arrangements comprising at least two arrangements of a 1:4 fine-grain structured sparsity weight arrangement, a 2:4 fine-grain structured sparsity weight arrangement, a 4:8 fine-grain structured sparsity weight arrangement, and a 2:8 fine-grain structured sparsity weight arrangement, wherein a N:M fine-grain structured sparsity weight arrangement is a weight arrangement in which in each group of M consecutive weights, there are at most N weights that have a non-zero value;
a weight multiplexer configured to output one of the weight values (102, 102', 102") stored in the weight buffer (WBUF) as a first operand value based on the selected fine-grain structured sparsity weight arrangement;
an activation buffer (ABUF) configured to store activation values (101, 101', 101");
an activation multiplexer coupled to the activation buffer (ABUF), the activation multiplexer configured to output one of the activation values (101, 101', 101") stored in the activation buffer (ABUF) as a second operand value, the second operand value and the first operand value forming an operand value pair; and
a multiplier unit configured to output a product value for the operand value pair, wherein:

the weight buffer (WBUF) is a first weight buffer comprising an array of first weight registers, each first weight register being configured to store a weight value (102, 102', 102") in the fine-grain structured sparsity weight arrangement;
the weight multiplexer is a first weight multiplexer configured to select a first weight register based on the selected fine-grain structured sparsity weight arrangement and output the weight value (102, 102', 102") stored in the selected first weight register as the first operand value;
the activation buffer (ABUF) is a first activation buffer comprising a first predetermined number of first activation registers, each first activation register being configured to store an activation value (101, 101', 101"); and
the activation multiplexer is a first activation multiplexer comprising a second predetermined number of first activation multiplexer inputs, each respective input of the first activation multiplexer being connected to a corresponding first activation register within a first group of first activation registers, the first activation multiplexer being configured to select a first activation register based on the selected fine-grain structured sparsity weight arrangement and output the activation value (101, 101', 101") stored in the selected first activation register as the second operand value, the activation value (101, 101', 101") output as the second operand value corresponding to the weight value (102, 102', 102") output as the first operand value; and the multiplier unit is a first multiplier unit configured to output a first product value of the first operand value and the second operand value as the product value.

2. The neural processing unit (700, 1070) of claim 1, comprising:

a weight multiplexer array comprising the weight multiplexer and configured to output one or more weight values (102, 102', 102") stored in the weight buffer (WBUF) as first operand values based on the selected fine-grain structured sparsity weight arrangement;
an activation multiplexer array (AMUX) comprising the activation multiplexer and inputs to the activation multiplexer array (AMUX) coupled to the activation buffer (ABUF), the activation multiplexer array (AMUX) configured to output one or more of the activation values (101, 101', 101") stored in the activation buffer (ABUF) as second operand values, each respective second operand value and a corresponding first operand value forming an operand value pair; and
a multiplier array (MULT) comprising the multiplier unit and configured to output a product value for each operand value pair.

3. The neural processing unit (700, 1070) of claim 2, wherein the activation buffer (ABUF) comprises 8 activation registers to store 8 activation values (101, 101', 101"),

wherein the weight multiplexer array comprises a first weight multiplexer configured to select a weight register based on the selected fine-grain structured sparsity weight arrangement and to output the weight value (102, 102', 102") stored in the selected weight register as a first operand value;
wherein the activation multiplexer array (AMUX) comprises a first activation multiplexer comprising seven inputs, each respective input of the first activation multiplexer being connected to a corresponding activation register within a first group of activation registers, the first activation multiplexer being configured to select an activation register in the first group of activation registers based on the selected fine-grain structured sparsity weight arrangement and to output the activation value (101, 101', 101") stored in the selected activation register as a second operand value, the second operand value corresponding to the first operand value and forming a first operand value pair; and
wherein the multiplier array (MULT) comprises a first multiplier unit configured to output a product value for the first operand value pair.

4. The neural processing unit (700, 1070) of claim 3, wherein the weight values (102, 102', 102") are stored in the weight buffer (WBUF) in a 1:4 fine-grain structured sparsity weight arrangement, or in a 2:8 fine-grain structured sparsity weight arrangement, and
wherein the first group of activation registers comprises 7 activation registers.

5. The neural processing unit (700, 1070) of claim 3, wherein the weight values (102, 102', 102") are stored in the weight buffer (WBUF) in a 2:4 fine-grain structured sparsity weight arrangement, and
wherein the first group of activation registers comprises 4 activation registers.

6. The neural processing unit (700, 1070) of claim 3, wherein the weight values (102, 102', 102") are stored in the weight buffer (WBUF) in a 4:8 fine-grain structured sparsity weight arrangement, and
wherein the first group of activation registers comprises 6 activation registers.

7. The neural processing unit (700, 1070) of claim 3, wherein the weight values (102, 102', 102") are arranged in a 2:8 fine-grain structured sparsity configuration, and
wherein the activation registers comprise two rows of four activation registers in which two output multiplexers are configured to select one activation register from each row.

8. The neural processing unit (700, 1070) of claim 3, wherein the weight values (102, 102', 102") are arranged in a 2:4 fine-grained structured sparsity configuration, and
wherein the activation registers comprise two rows of two activation registers in which two output multiplexers are configured to select one activation register from each row.

9. The neural processing unit (700, 1070) of any one of claims 1 to 8, wherein the first predetermined number of first activation registers comprises 8, and the second predetermined number of activation multiplexer inputs comprises 7.

10. The neural processing unit (700, 1070) of claim 9, wherein the weight values (102, 102', 102") are arranged in a 1:4 fine-grain structured sparsity configuration or in a 2:4 fine-grain structured sparsity configuration.

11. The neural processing unit (700, 1070) of claim 9, wherein the weight values (102, 102', 102") are arranged in a 4:8 fine-grain structured sparsity configuration.

12. The neural processing unit (700, 1070) of claim 9, wherein the weight values (102, 102', 102") are arranged in a 2:8 fine-grain structured sparsity configuration.

13. The neural processing unit (700, 1070) of any one of claims 1 to 12, further comprising:

a second weight multiplexer configured to select a first weight register based on the selected fine-grain structured sparsity weight arrangement and output the weight value (102, 102', 102") stored in the selected first weight register as a third operand value;
a second activation multiplexer comprising a second predetermined number of second activation multiplexer inputs, each respective input of the second activation multiplexer being connected to a corresponding first activation register within a second group of activation registers that is different from the first group of first activation registers, the second activation multiplexer being configured to select a first activation register based on the selected fine-grain structured sparsity weight arrangement and output the activation value (101, 101', 101") stored in the selected first activation register as a fourth operand value, the activation value (101, 101', 101") output as the fourth operand value corresponding to the weight value (102, 102', 102") output as the third operand value; and
a second multiplier unit configured to output a second product value of the third operand value and the fourth operand value.

14. The neural processing unit (700, 1070) of claim 13, further comprising:

a second weight buffer configured to store weight values (102, 102', 102") of fine-grain structured sparsity weights based on the selected fine-grain structured sparsity weight arrangement;
a third weight multiplexer configured to select a second weight register based on the selected fine-grain structured sparsity weight arrangement and output the weight value (102, 102', 102") stored in the selected second weight register as a fifth operand value;
a second activation buffer comprising a first predetermined number of second activation registers, each second activation register being configured to store an activation value (101, 101', 101");
a third activation multiplexer comprising a second predetermined number of third activation multiplexer inputs, each respective input of the third activation multiplexer being connected to a corresponding second activation register within a first group of second activation registers, the third activation multiplexer being configured to select a second activation register based on the selected fine-grain structured sparsity weight arrangement and output the activation value (101, 101', 101") stored in the selected second activation register as a sixth operand value, the activation value (101, 101', 101") output as the sixth operand value corresponding to the weight value (102, 102', 102") output as the fifth operand value;
a third multiplier unit configured to output a third product value of the fifth operand value and the sixth operand value;
a fourth weight multiplexer configured to select a second weight register based on the selected fine-grain structured sparsity weight arrangement and output the weight value (102, 102', 102") stored in the selected second weight register as a seventh operand value;
a fourth activation multiplexer comprising a second predetermined number of fourth activation multiplexer inputs, each respective input of the fourth activation multiplexer being connected to a corresponding second activation register within a fourth group of second activation registers that is different from the third group of activation registers, the fourth activation multiplexer being configured to select a second activation register based on the selected fine-grain structured sparsity weight arrangement and output the activation value (101, 101', 101") stored in the selected second activation register as an eighth operand value; and
a fourth multiplier unit configured to output a fourth product value of the seventh operand value and the eighth operand value.

**Patentansprüche**

1.  Neuronale Verarbeitungseinheit (700, 1070), die Folgendes aufweist:

    einen Gewichtspuffer (WBUF), der konfiguriert ist, um Gewichtswerte (102, 102', 102") in einer feinkörnig strukturierten Sparsity-Gewichtsanordnung zu speichern, die aus einer Gruppe von feinkörnig strukturierten Sparsity-Gewichtsanordnungen ausgewählt ist, die mindestens zwei Anordnungen einer 1:4 feinkörnig strukturierten Sparsity-Gewichtsanordnung, einer 2:4 feinkörnig strukturierten Sparsity-Gewichtsanordnung, einer 4:8 feinkörnig strukturierten Sparsity-Gewichtsanordnung und einer 2:8 feinkörnig strukturierten Sparsity-Gewichtsanordnung, wobei eine N:M feinkörnig strukturierte Sparsity-Gewichtsanordnung eine Gewichtsanordnung ist, in der es in jeder Gruppe von M aufeinanderfolgenden Gewichten höchstens N Gewichte gibt, die einen Wert ungleich Null haben;
    einen Gewichts-Multiplexer, der konfiguriert ist, einen der in dem Gewichtspuffer (WBUF) gespeicherten Gewichtswerte (102, 102', 102") als einen ersten Operandenwert basierend auf der ausgewählten feinkörnig strukturierten Sparsity-Gewichtsanordnung auszugeben;
    einen Aktivierungspuffer (ABUF), der konfiguriert ist, Aktivierungswerte (101, 101', 101") zu speichern;
    einen Aktivierungs-Multiplexer, der mit dem Aktivierungspuffer (ABUF) gekoppelt ist, wobei der Aktivierungsmultiplexer konfiguriert ist, einen der Aktivierungswerte (101, 101', 101"), die in dem Aktivierungspuffer (ABUF) gespeichert sind, als einen zweiten Operandenwert auszugeben, wobei der zweite Operandenwert und der erste Operandenwert ein Operandenwertpaar bilden; und
    eine Multipliziereinheit, die konfiguriert ist, einen Produktwert für das Operandenwertpaar auszugeben,

    wobei:

    der Gewichtspuffer (WBUF) ein erster Gewichtspuffer ist, der eine Anordnung von ersten Gewichtsregistern aufweist, wobei jedes erste Gewichtsregister konfiguriert ist, einen Gewichtswert (102, 102', 102") in der feinkörnig strukturierten Sparsity-Gewichtsanordnung zu speichern;
    der Gewichts-Multiplexer ein erster Gewichts-Multiplexer ist, der konfiguriert ist, ein erstes Gewichtsregister basierend auf der ausgewählten feinkörnig strukturierten Sparsity-Gewichtsanordnung auszuwählen und den Gewichtswert (102, 102' und 102") in dem ausgewählten ersten Gewichtsregister als den ersten Operandenwert auszugeben;
    der Aktivierungspuffer (ABUF) ein erster Aktivierungspuffer ist, der eine erste vorbestimmte Anzahl von ersten Aktivierungsregistern aufweist, wobei jedes erste Aktivierungsregister konfiguriert ist, einen Aktivierungswert (101, 101', 101") zu speichern; und
    der Aktivierungsmultiplexer ein erster Aktivierungsmultiplexer ist, der eine zweite vorbestimmte Anzahl von ersten Aktivierungsmultiplexereingängen hat, wobei jeder jeweilige Eingang des ersten Aktivierungsmultiplexers mit einem entsprechenden ersten Aktivierungsregister innerhalb einer ersten Gruppe von ersten Aktivierungsregistern verbunden ist, wobei der erste Aktivierungsmultiplexer konfiguriert ist, ein erstes Aktivierungsregister basierend auf der ausgewählten feinkörnig strukturierten Sparsity-Gewichtsanordnung auszuwählen und den Aktivierungswert (101, 101', 101"), der in dem ausgewählten ersten Aktivierungsregister gespeichert ist, als den zweiten Operandenwert auszugeben, wobei der als zweiter Operandenwert ausgegebene Aktivierungswert (101, 101', 101") dem als erster Operandenwert ausgegebenen Gewichtswert (102, 102', 102") entspricht; und
    die Multipliziereinheit eine erste Multipliziereinheit ist, die so konfiguriert ist, dass sie einen ersten Produktwert des ersten Operandenwerts und des zweiten Operandenwerts als Produktwert ausgibt.

2.  Neuronale Verarbeitungseinheit (700, 1070) nach Anspruch 1, die aufweist:

    eine Gewichts-Multiplexer-Anordnung, die den Gewichts-Multiplexer aufweist und so konfiguriert ist, dass sie einen oder mehrere Gewichtswerte (102, 102', 102"), die in dem Gewichtspuffer (WBUF) gespeichert sind, als erste Operandenwerte ausgibt basierend auf der ausgewählten, feinkörnig strukturierten Sparsity-Gewichtsanordnung;
    eine Aktivierungsmultiplexer-Anordnung (AMUX), die den Aktivierungsmultiplexer und Eingänge zu der Aktivierungsmultiplexer-Anordnung (AMUX) aufweist, die mit dem Aktivierungspuffer (ABUF) gekoppelt sind, wobei die Aktivierungsmultiplexer-Anordnung (AMUX) so konfiguriert ist, dass sie einen oder mehrere der Aktivierungswerte (101, 101"), die in dem Aktivierungspuffer (ABUF) als zweite Operandenwerte gespeichert sind, ausgibt, wobei jeder jeweilige zweite Operandenwert und ein entsprechender erster Operandenwert ein Operandenwertpaar bilden; und
    eine Multiplizieranordnung (MULT), die die Multipliziereinheit aufweist und so konfiguriert ist, dass sie einen Produktwert für jedes Operandenwertpaar ausgibt.

3. Neuronale Verarbeitungseinheit (700, 1070) nach Anspruch 2, wobei der Aktivierungspuffer (ABUF) 8 Aktivierungsregister zum Speichern von 8 Aktivierungswerten (101, 101', 101") aufweist,

wobei die Gewichts-Multiplexer-Anordnung einen ersten Gewichts-Multiplexer aufweist, der so konfiguriert ist, dass er ein Gewichtsregister basierend auf der ausgewählten feinkörnig strukturierten Sparsity-Gewichtsanordnung auswählt und den in dem ausgewählten Gewichtsregister gespeicherten Gewichtswert (1 02, 102', 102") als ersten Operandenwert ausgibt;
wobei die Aktivierungsmultiplexer-Anordnung (AMUX) einen ersten Aktivierungsmultiplexer mit sieben Eingängen aufweist, wobei jeder jeweilige Eingang des ersten Aktivierungsmultiplexers mit einem entsprechenden Aktivierungsregister innerhalb einer ersten Gruppe von Aktivierungsregistern verbunden ist, wobei der erste Aktivierungsmultiplexer so konfiguriert ist, dass er basierend auf der ausgewählten feinkörnig strukturierten Sparsity-Gewichtsanordnung auswählt und den Aktivierungswert (101, 101', 101"), der in dem ausgewählten Aktivierungsregister gespeichert ist, als einen zweiten Operandenwert ausgibt, wobei der zweite Operandenwert dem ersten Operandenwert entspricht und ein erstes Operandenwertpaar bildet; und
wobei die Multiplizieranordnung (MULT) eine erste Multiplizieranordnung aufweist, die so konfiguriert ist, dass sie einen Produktwert für das erste Operandenwertpaar ausgibt.

4. Neuronale Verarbeitungseinheit (700, 1070) nach Anspruch 3, wobei die Gewichtswerte (102, 102', 102") in dem Gewichtspuffer (WBUF) in einer feinkörnig strukturierten Sparsity-Gewichtsanordnung 1:4 oder in einer feinkörnig strukturierten Sparsity-Gewichtsanordnung 2:8 gespeichert sind, und
wobei die erste Gruppe von Aktivierungsregistern 7 Aktivierungsregister aufweist.

5. Neuronale Verarbeitungseinheit (700, 1070) nach Anspruch 3, wobei die Gewichtswerte (102, 102', 102") in dem Gewichtspuffer (WBUF) in einer 2:4 feinkörnig strukturierten Sparsity-Gewichtsanordnung gespeichert sind, und
wobei die erste Gruppe von Aktivierungsregistern 4 Aktivierungsregister aufweist.

6. Neuronale Verarbeitungseinheit (700, 1070) nach Anspruch 3, wobei die Gewichtswerte (102, 102', 102") in dem Gewichtspuffer (WBUF) in einer 4:8 feinkörnig strukturierten Sparsity-Gewichtsanordnung gespeichert sind, und
wobei die erste Gruppe von Aktivierungsregistern 6 Aktivierungsregister aufweist.

7. Neuronale Verarbeitungseinheit (700, 1070) nach Anspruch 3, wobei die Gewichtswerte (102, 102', 102") in einer 2:8 feinkörnig strukturierten Sparsity-Anordnung angeordnet sind, und
wobei die Aktivierungsregister zwei Reihen mit vier Aktivierungsregistern aufweisen, in denen zwei Ausgabemultiplexer so konfiguriert sind, dass sie ein Aktivierungsregister von jeder Reihe auswählen.

8. Neuronale Verarbeitungseinheit (700, 1070) nach Anspruch 3, wobei die Gewichtswerte (102, 102', 102") in einer 2:4 feinkörnig strukturierten Sparsity-Anordnung angeordnet sind, und
wobei die Aktivierungsregister zwei Reihen mit zwei Aktivierungsregistern aufweisen, in denen zwei Ausgabemultiplexer so konfiguriert sind, dass sie ein Aktivierungsregister von jeder Reihe auswählen.

9. Neuronale Verarbeitungseinheit (700, 1070) nach einem der Ansprüche 1 bis 8, wobei die erste vorbestimmte Anzahl von ersten Aktivierungsregistern 8 und die zweite vorbestimmte Anzahl von Aktivierungsmultiplexereingängen 7 beträgt.

10. Neuronale Verarbeitungseinheit (700, 1070) nach Anspruch 9, wobei die Gewichtswerte (102, 102', 102") in einer 1:4 feinkörnig strukturierten Sparsity-Anordnung oder in einer 2:4 feinkörnig strukturierten Sparsity-Anordnung angeordnet sind.

11. Neuronale Verarbeitungseinheit (700, 1070) nach Anspruch 9, wobei die Gewichtswerte (102, 102', 102") in einer 4:8 feinkörnig strukturierten Sparsity-Anordnung angeordnet sind.

12. Neuronale Verarbeitungseinheit (700, 1070) nach Anspruch 9, wobei die Gewichtswerte (102, 102', 102") in einer 2:8 feinkörnig strukturierten Sparsity-Anordnung angeordnet sind.

13. Neuronale Verarbeitungseinheit (700, 1070) nach einem der Ansprüche 1 bis 12, die ferner aufweist:

einen zweiten Gewichtsmultiplexer, der so konfiguriert ist, dass er ein erstes Gewichtsregister basierend auf der ausgewählten feinkörnig strukturierten Sparsity-Gewichtsanordnung auswählt und den in dem ausgewählten ersten Gewichtsregister gespeicherten Gewichtswert (102, 102', 102") als dritten Operandenwert ausgibt; einen zweiten Aktivierungsmultiplexer, der eine zweite vorbestimmte Anzahl von zweiten Aktivierungsmultiplexereingängen aufweist, wobei jeder jeweilige Eingang des zweiten Aktivierungsmultiplexers mit einem entsprechenden ersten Aktivierungsregister innerhalb einer zweiten Gruppe von Aktivierungsregistern verbunden ist, die sich von der ersten Gruppe von ersten Aktivierungsregistern unterscheidet, wobei der zweite Aktivierungsmultiplexer konfiguriert ist, ein erstes Aktivierungsregister basierend auf der ausgewählten feinkörnig strukturierten Sparsity-Gewichtsanordnung auszuwählen und den Aktivierungswert (101, 101', 101"), der in dem ausgewählten ersten Aktivierungsregister gespeichert ist, als einen vierten Operandenwert auszugeben, wobei der Aktivierungswert (101, 101', 101"), der als der vierte Operandenwert ausgegeben wird, dem Gewichtswert (102, 102', 102") entspricht, der als der dritte Operandenwert ausgegeben wird; und eine zweite Multipliziereinheit, die so konfiguriert ist, dass sie einen zweiten Produktwert des dritten Operandenwerts und des vierten Operandenwerts ausgibt.

14. Neuronale Verarbeitungseinheit (700, 1070) nach Anspruch 13, die ferner aufweist:

einen zweiten Gewichtspuffer, der so konfiguriert ist, dass er Gewichtswerte (102, 102', 102") von feinkörnig strukturierten Sparsity-Gewichten basierend auf der ausgewählten feinkörnig strukturierten Sparsity-Gewichtsanordnung speichert; einen dritten Gewichtsmultiplexer, der so konfiguriert ist, dass er basierend auf der ausgewählten feinkörnig strukturierten Sparsity-Gewichtsanordnung ein zweites Gewichtsregister auswählt und den in dem ausgewählten zweiten Gewichtsregister gespeicherten Gewichtswert (102, 102', 102") als fünften Operandenwert ausgibt; einen zweiten Aktivierungspuffer, der eine erste vorbestimmte Anzahl von zweiten Aktivierungsregistern, wobei jedes zweite Aktivierungsregister so konfiguriert ist, dass es einen Aktivierungswert (101, 101', 101") speichert; einen dritten Aktivierungsmultiplexer, der eine zweite vorbestimmte Anzahl von dritten Aktivierungsmultiplexereingängen aufweist, wobei jeder jeweilige Eingang des dritten Aktivierungsmultiplexers mit einem entsprechenden zweiten Aktivierungsregister innerhalb einer ersten Gruppe von zweiten Aktivierungsregistern verbunden ist, wobei der dritte Aktivierungsmultiplexer so konfiguriert ist, dass er ein zweites Aktivierungsregister basierend auf der ausgewählten feinkörnig strukturierten Sparsity-Gewichtsanordnung auswählt und den Aktivierungswert (101, 101', 101"), der in dem ausgewählten zweiten Aktivierungsregister gespeichert ist, als einen sechsten Operandenwert ausgibt, wobei der Aktivierungswert (101, 101', 101"), der als der sechste Operandenwert ausgegeben wird, dem Gewichtswert (102, 102', 102") entspricht, der als fünfter Operandenwert ausgegeben wird; eine dritte Multipliziereinheit, die so konfiguriert ist, dass sie einen dritten Produktwert aus dem fünften Operandenwert und dem sechsten Operandenwert ausgibt; ein vierter Gewichtsmultiplexer, der so konfiguriert ist, dass er basierend auf der ausgewählten feinkörnig strukturierten Sparsity-Gewichtsanordnung ein zweites Gewichtsregister auswählt und den Gewichtswert (1 02, 102', 102") als siebten Operandenwert ausgibt; ein vierter Aktivierungsmultiplexer, der eine zweite vorbestimmte Anzahl von vierten Aktivierungsmultiplexereingängen aufweist, wobei jeder jeweilige Eingang des vierten Aktivierungsmultiplexers mit einem entsprechenden zweiten Aktivierungsregister innerhalb einer vierten Gruppe von zweiten Aktivierungsregistern verbunden ist, die sich von der dritten Gruppe von Aktivierungsregistern unterscheidet, wobei der vierte Aktivierungsmultiplexer so konfiguriert ist, dass er ein zweites Aktivierungsregister basierend auf der ausgewählten feinkörnig strukturierten Sparsity-Gewichtsanordnung auswählt und den Aktivierungswert (101, 101', 101"), der in dem ausgewählten zweiten Aktivierungsregister gespeichert ist, als achten Operandenwert ausgibt; und eine vierte Multipliziereinheit, die so konfiguriert ist, dass sie einen vierten Produktwert des siebten Operandenwerts und des achten Operandenwerts ausgibt.

## Revendications

1. Unité de traitement neuronal (700, 1070) comprenant:

un tampon de pondération (WBUF) configuré pour stocker des valeurs de pondération (102, 102', 102") dans une disposition de pondération de sparsité structurée à grain fin qui est sélectionnée dans un groupe de dispositions de pondération de sparsité structurée à grain fin comprenant au moins deux dispositions parmi une disposition de pondération de sparsité structurée à grain fin 1:4, une disposition de pondération de sparsité structurée à grain fin 2:4 , une disposition de pondération de sparsité structurée à grain fin 4:8 et une disposition de pondération de sparsité structurée à grain fin 2:8, dans laquelle une disposition de pondération de sparsité structurée à grain fin N:M est une disposition de pondération dans laquelle, dans chaque groupe de M pondérations consécutives, il y a au maximum N pondérations qui ont une valeur non-nulle; un multiplexeur de pondération configuré pour sortir une des valeurs de pondération (102, 102', 102") stockées dans le tampon de pondération (WBUF) en tant que première valeur d'opérande sur la base de la disposition de pondération de sparsité structurée à grain fin sélectionnée; un tampon d'activation (ABUF) configuré pour stocker des valeurs d'activation (101, 101', 101"); un multiplexeur d'activation couplé au tampon d'activation (ABUF), le multiplexeur d'activation configuré pour sortir une des valeurs d'activation (101, 101', 101") stockées dans le tampon d'activation (ABUF) en tant que deuxième valeur d'opérande, la deuxième valeur d'opérande et la première valeur d'opérande formant une paire de valeurs d'opérande; et une unité de multiplication configurée pour sortir une valeur de produit pour la paire de valeurs d'opérande,

dans laquelle:

le tampon de pondération (WBUF) est un premier tampon de pondération comprenant un groupement de premiers registres de pondération, chaque premier registre de pondération étant configuré pour stocker une valeur de pondération (102, 102', 102") dans la disposition de pondération de sparsité structurée à grain fin;
le multiplexeur de pondération est un premier multiplexeur de pondération configuré pour sélectionner un premier registre de pondération sur la base de la disposition de pondération de sparsité structurée à grain fin sélectionnée et pour sortir la valeur de pondération (102, 102', 102") stockée dans le premier registre de pondération sélectionné en tant que première valeur d'opérande;
le tampon d'activation (ABUF) est un premier tampon d'activation comprenant un premier nombre prédéterminé de premiers registres d'activation, chaque premier registre d'activation étant configuré pour stocker une valeur d'activation (101, 101', 101"); et
le multiplexeur d'activation est un premier multiplexeur d'activation comprenant un deuxième nombre prédéterminé d'entrées de premier multiplexeur d'activation, chaque entrée respective du premier multiplexeur d'activation étant connectée à un premier registre d'activation correspondant au sein d'un premier groupe de premiers registres d'activation, le premier multiplexeur d'activation étant configuré pour sélectionner un premier registre d'activation sur la base de la disposition de pondération de sparsité structurée à grain fin sélectionnée et sortir la valeur d'activation (101, 101', 101") stockée dans le premier registre d'activation sélectionné en tant que deuxième valeur d'opérande, la valeur d'activation (101, 101', 101") sortie en tant que deuxième valeur d'opérande correspondant à la valeur de pondération (102, 102', 102") sortie en tant que première valeur d'opérande; et
l'unité de multiplication est une première unité de multiplication configurée pour sortir une première valeur de produit de la première valeur d'opérande et de la deuxième valeur d'opérande en tant que la valeur de produit.

**2.** Unité de traitement neuronal (700, 1070) de la revendication 1, comprenant:

un groupement multiplexeur de pondération comprenant le multiplexeur de pondération et configuré pour sortir une ou plusieurs valeurs de pondération (102, 102', 102") stockées dans le tampon de pondération (WBUF) en tant que premières valeurs d'opérande sur la base de la disposition de pondération de sparsité structurée à grain fin sélectionnée;
un groupement multiplexeur d'activation (AMUX) comprenant le multiplexeur d'activation et des entrées du groupement multiplexeur d'activation (AMUX) couplées au tampon d'activation (ABUF), le groupement multiplexeur d'activation (AMUX) configuré pour sortir une ou plusieurs des valeurs d'activation (101, 101', 101") stockées dans le tampon d'activation (ABUF) en tant que deuxièmes valeurs d'opérande, chaque deuxième valeur d'opérande respective et une première valeur d'opérande correspondante formant une paire de valeurs d'opérande; et
un groupement multiplicateur (MULT) comprenant l'unité de multiplication et configuré pour sortir une valeur de produit pour chaque paire de valeurs d'opérande.

**3.** Unité de traitement neuronal (700, 1070) de la revendication 2, dans laquelle le tampon d'activation (ABUF) comprend 8 registres d'activation pour stocker 8 valeurs d'activation (101, 101', 101"),

dans lequel le groupement multiplexeur de pondération comprend un premier multiplexeur de pondération configuré pour sélectionner un registre de pondération sur la base de la disposition de pondération de sparsité structurée à grain fin sélectionnée et pour sortir la valeur de pondération (102, 102', 102") stockée dans le registre de pondération sélectionné en tant que première valeur d'opérande;

dans laquelle le groupement multiplexeurs d'activation (AMUX) comprend un premier multiplexeur d'activation comprenant sept entrées, chaque entrée respective du premier multiplexeur d'activation étant connectée à un registre d'activation correspondant au sein d'un premier groupe de registres d'activation, le premier multiplexeur d'activation étant configuré pour sélectionner un registre d'activation dans le premier groupe de registres d'activation sur la base de la disposition de pondération de sparsité structurée à grain fin sélectionnée et pour sortir la valeur d'activation (101, 101', 101") stockée dans le registre d'activation sélectionné en tant que deuxième valeur d'opérande, la deuxième valeur d'opérande correspondant à la première valeur d'opérande et formant une première paire de valeurs d'opérande; et

dans lequel le groupement multiplicateur (MULT) comprend une première unité de multiplication configurée pour sortir une valeur de produit pour la première paire de valeurs d'opérande.

4. Unité de traitement neuronal (700, 1070) de la revendication 3, dans laquelle les valeurs de pondération (102, 102', 102") sont stockées dans le tampon de pondération (WBUF) dans une disposition de pondération de sparsité structurée à grain fin 1:4, ou dans une disposition de pondération de sparsité structurée à grain fin 2:8, et

dans lequel le premier groupe de registres d'activation comprend 7 registres d'activation.

5. Unité de traitement neuronal (700, 1070) de la revendication 3, dans laquelle les valeurs de pondération (102, 102', 102") sont stockées dans le tampon de pondération (WBUF) dans une disposition de pondération de sparsité structurée à grain fin 2:4, et

dans laquelle le premier groupe de registres d'activation comprend 4 registres d'activation.

6. Unité de traitement neuronal (700, 1070) de la revendication 3, dans laquelle les valeurs de pondération (102, 102', 102") sont stockées dans le tampon de pondération (WBUF) dans une disposition de pondération de sparsité structurée à grain fin 4:8, et

dans laquelle le premier groupe de registres d'activation comprend 6 registres d'activation.

7. Unité de traitement neuronal (700, 1070) de la revendication 3, dans laquelle les valeurs de pondération (102, 102', 102") sont disposées selon une configuration de sparsité structurée à grain fin 2:8, et

dans laquelle les registres d'activation comprennent deux rangées de quatre registres d'activation dans lesquelles deux multiplexeurs de sortie sont configurés pour sélectionner un registre d'activation dans chaque rangée.

8. Unité de traitement neuronal (700, 1070) de la revendication 3, dans laquelle les valeurs de pondération (102, 102', 102") sont disposées selon une configuration de sparsité structurée à grain fin 2:4, et

dans laquelle les registres d'activation comprennent deux rangées de deux registres d'activation dans lesquelles deux multiplexeurs de sortie sont configurés pour sélectionner un registre d'activation dans chaque rangée.

9. Unité de traitement neuronal (700, 1070) de l'une quelconque des revendications 1 à 8, dans laquelle le premier nombre prédéterminé de premiers registres d'activation comprend 8, et le deuxième nombre prédéterminé d'entrées de multiplexeur d'activation comprend 7.

10. Unité de traitement neuronal (700, 1070) de la revendication 9, dans laquelle les valeurs de pondération (102, 102', 102") sont disposées selon une configuration de sparsité structurée à grain fin 1:4 ou dans une configuration de sparsité structurée à grain fin 2:4.

11. Unité de traitement neuronal (700, 1070) de la revendication 9, dans laquelle les valeurs de pondération (102, 102', 102") sont disposées selon une configuration de sparsité structurée à grain fin 4:8.

12. Unité de traitement neuronal (700, 1070) de la revendication 9, dans laquelle les valeurs de pondération (102, 102', 102") sont disposées selon une configuration de sparsité structurée à grain fin 2:8.

13. Unité de traitement neuronal (700, 1070) de l'une quelconque des revendications 1 à 12, comprenant en outre:

un deuxième multiplexeur de pondération configuré pour sélectionner un premier registre de pondération sur la base de la disposition de pondération de sparsité structurée à grain fin sélectionnée et sortir la valeur de pondération (102, 102', 102") stockée dans le premier registre de pondération sélectionné en tant que troisième valeur d'opérande;

un deuxième multiplexeur d'activation comprenant un deuxième nombre prédéterminé d'entrées de deuxième multiplexeur d'activation, chaque entrée respective du deuxième multiplexeur d'activation étant connectée à un premier registre d'activation correspondant au sein d'un deuxième groupe de registres d'activation qui est différent du premier groupe de premiers registres d'activation, le deuxième multiplexeur d'activation étant configuré pour sélectionner un premier registre d'activation sur la base de la disposition de pondération de sparsité structurée à grain fin sélectionnée et sortir la valeur d'activation (101, 101', 101") stockée dans le premier registre d'activation sélectionné en tant que quatrième valeur d'opérande, la valeur d'activation (101, 101', 101") sortie en tant que quatrième valeur d'opérande correspondant à la valeur de pondération (102, 102', 102") sortie en tant que troisième valeur d'opérande; et

une deuxième unité de multiplication configurée pour sortir une deuxième valeur de produit de la troisième valeur d'opérande et de la quatrième valeur d'opérande.

**14.** Unité de traitement neuronal (700, 1070) de la revendication 13, comprenant en outre:

un deuxième tampon de pondération configuré pour stocker des valeurs de pondération (102, 102', 102") de sparsité structurée à grain fin sur la base de la disposition de pondération de sparsité structurée à grain fin sélectionnée;

un troisième multiplexeur de pondération configuré pour sélectionner un deuxième registre de pondération sur la base de la disposition de pondération de sparsité structurée à grain fin sélectionnée et sortir la valeur de pondération (102, 102', 102") stockée dans le deuxième registre de pondération sélectionné en tant que cinquième valeur d'opérande;

un deuxième tampon d'activation comprenant un premier nombre prédéterminé de deuxièmes registres d'activation, chaque deuxième registre d'activation étant configuré pour stocker une valeur d'activation (101, 101', 101");

un troisième multiplexeur d'activation comprenant un deuxième nombre prédéterminé d'entrées de troisième multiplexeur d'activation, chaque entrée respective du troisième multiplexeur d'activation étant connectée à un deuxième registre d'activation correspondant au sein d'un premier groupe de deuxièmes registres d'activation, le troisième multiplexeur d'activation étant configuré pour sélectionner un deuxième registre d'activation sur la base de la disposition de pondération de sparsité structurée à grain fin sélectionnée et pour sortir la valeur d'activation (101, 101', 101") stockée dans le deuxième registre d'activation sélectionné en tant que sixième valeur d'opérande, la valeur d'activation (101, 101', 101") sortie en tant que sixième valeur d'opérande correspondant à la valeur de pondération (102, 102', 102") sortie en tant que cinquième valeur d'opérande;

une troisième unité de multiplication configurée pour délivrer une troisième valeur de produit de la cinquième valeur d'opérande et de la sixième valeur d'opérande;

un quatrième multiplexeur de pondération configuré pour sélectionner un deuxième registre de pondération sur la base de la disposition de pondération de sparsité structurée à grain fin sélectionnée et pour sortir la valeur de pondération (102, 102', 102") stockée dans le deuxième registre de pondération sélectionné en tant que septième valeur d'opérande;

un quatrième multiplexeur d'activation comprenant un deuxième nombre prédéterminé d'entrées de quatrième multiplexeur d'activation, chaque entrée respective du quatrième multiplexeur d'activation étant connectée à un deuxième registre d'activation correspondant au sein d'un quatrième groupe de deuxièmes registres d'activation qui est différent du troisième groupe de registres d'activation, le quatrième multiplexeur d'activation étant configuré pour sélectionner un deuxième registre d'activation sur la base de la disposition de pondération de sparsité structurée à grain fin sélectionnée et sortir la valeur d'activation (101, 101', 101") stockée dans le deuxième registre d'activation sélectionné en tant que huitième valeur de l'opérande; et

une quatrième unité de multiplication configurée pour sortir une quatrième valeur de produit de la septième valeur d'opérande et de la huitième valeur d'opérande.

FIG. 1A

FIG. 1B

FIG. 1C

EP 4 343 631 B1

201

Dense weights W

R

C

202

Grouping

Pruning

Sparse weights $\tilde{W}$

M ⟶    ← N →

203                    203

| 1 | 0 | 1 | 0 | | 1 | 1 | 0 | 0 |
| 1 | 1 | 0 | 0 | | 1 | 0 | 0 | 1 |
| 0 | 1 | 1 | 0 | | 0 | 0 | 1 | 1 |
| 0 | 1 | 0 | 1 | | 0 | 1 | 1 | 0 |

204                    204

Sparse subnetwork mask

C

Deploy

205

$C\dfrac{N}{M}$

Non-zero
data values

EP 4 343 631 B1

FIG. 2

N:M = 1:4

$1+C_w$

$C_0$

Case 1

Case 2

Case 3

Case 4

Possible Sparse-mask Patterns

FIG. 3A

$C_0$

REG REG REG REG

ABUF

AMUX

X — MULT

FIG. 3B

FIG. 4B

FIG. 4A

FIG. 5B

FIG. 5A

FIG. 6A

FIG. 6B

$N:M = 4:8$

$1+C_w$

$C_0$

REG  REG  REG  REG  REG  REG  REG  REG

ABUF

MUX  MUX  MUX  MUX

AMUX

X  X  X  X

MULT

$C_0$

All-to-the-left case

All-to-the-right case

FIG. 7

2 activations out of
(2 input channels
x 2 output channels)
2-to-1 AMUX
2-to-1 deMux + AT
2 ABUF width

2 activations out of
(4 input channels)
3-to-1 AMUX
4 ABUF width

N:M = 2:4

FIG. 8B

2 activations out of
(4 input channels
x 2 output channels)
4-to-1 AMUX,
2-to-1 deMUX + AT
4 ABUF width

2 activations out
of 8 input channels
7-to-1 AMUX
8 ABUF width

N:M = 2:8

FIG. 8A

WBUF

$K_0$ (2 output channels)

$C_0$ (4 input channels)

ABUF
$C_0$ (4 input channels)

X          X

Adder      Adder
Tree       Tree

Dense data path for 4 input
channels and 2 output channels

FIG. 9A

WBUF

$K_0$ (2 output channels)

$C_0$ (4 input channels)

4-to-1 AMUX

1-to-2        1-to-2
deMux         deMux

ABUF
$C_0$ (4 input channels)

X          X

Adder      Adder
Tree       Tree

Adder      Additional Adder
Tree       Trees

Sparse data path for 4 input
channels and 2 output channels

FIG. 9B

EP 4 343 631 B1

EP 4 343 631 B1

1000

1090

| 1040 | 1050 |
|---|---|
| INTERFACE | GRAPHICS PROCESSING UNIT |

| 1030 | 1010 |
|---|---|
| MEMORY DEVICE | CONTROLLER |

| 1020 | 1060 |
|---|---|
| I/O DEVICE | IMAGE PROCESSING UNIT |

| 1080 | 1070 |
|---|---|
| TOF PROCESSING UNIT | NEURAL PROCESSING UNIT |

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Griffin: Rethinking Sparse Optimization for Deep Learning Architectures. **HOON SHIN JONG et al.** 2022 IEEE INTERNATIONAL SYMPOSIUM ON HIGH-PERFORMANCE COMPUTER ARCHITECTURE (HPCA). IEEE, 02 April 2022, 861-875

- Learning N:M Fine-grained Structured Sparse Neural Networks From Scratch. **AOJUN ZHOU et al.** ARXIV.ORG. CORNELL UNIVERSITY LIBRARY, 18 April 2021